# DEMANDE DE BREVET EUROPEEN

(11) **EP 2 209 230 A1**
(43) Date de publication de la demande: **21.07.2010**
(21) Numéro de dépôt: 10150769.7
(22) Date de dépôt: 14.01.2010
(51) Int. Cl.: H04B 10/12

(54) **cellule pour un réseau de communications cellulaire, apté a couvrir une voie de circulation allongée, réseau de communications comprenant une telle cellule et répéteur adapté pour fonctionner dans une telle cellule**

(30) Priorité: 14.01.2009 FR 0950180
(71) Demandeur: Selecom Sud Electronique Communication, 66500 Prades (FR)
(72) Inventeur: Deblock, Olivier, 66500 Prades (FR)
(74) Mandataire: Le Forestier, Eric

(57) **Abrégé**

L'invention concerne une cellule pour un réseau de communications cellulaire apte à couvrir une voie de circulation allongée notamment d'un réseau routier ou ferré, comprenant : une station de base (BTS) connecté à une antenne principale (Ao) et apte à émettre/recevoir un signal de radiocommunication ; un répéteur (Rᵢ) connecté à une antenne auxiliaire (Aᵢ) ; une fibre optique (10) reliant le répéteur (Rᵢ) à la station de base (BTS) et apte à transmettre le signal de radiocommunication de la station de base (BTS) vers le répéteur (Rᵢ) et inversement avec un retard de transport lié au temps de propagation dans la fibre optique ; la cellule est **caractérisée en ce que** la station de base (BTS) comprend un dispositif apte à retarder l'émission/réception, au niveau de l'antenne principale (A₀), du signal de radiocommunication d'un retard sensiblement égal audit retard de transport, pour synchroniser les signaux de radiocommunications émis/reçus par l'antenne principale (A₀) et l'antenne auxiliaire (Aᵢ).

## Description

### DOMAINE TECHNIQUE GENERAL

L'invention concerne les réseaux de communications cellulaires notamment ceux couvrant des zones géographiques s'étendant le long de voies de circulation et plus particulièrement des voies de chemin de fer d'un réseau ferré ou d'une autoroute.

### ETAT DE LA TECHNIQUE

La couverture radio-cellulaire doit à la fois s'adapter aux contraintes de couverture totale du territoire, mais doit aussi tenir compte des contraintes particulières de densification du trafic des communications.

Pour cela, le dimensionnement et la forme des cellules doivent pouvoir apporter des solutions d'optimisation du réseau.

Sur un trajet routier ou ferroviaire, une cellule allongée dite cellule « longue » est plus adaptée pour la couverture radio, de manière à apporter la qualité de service aux endroits où elle est nécessaire.

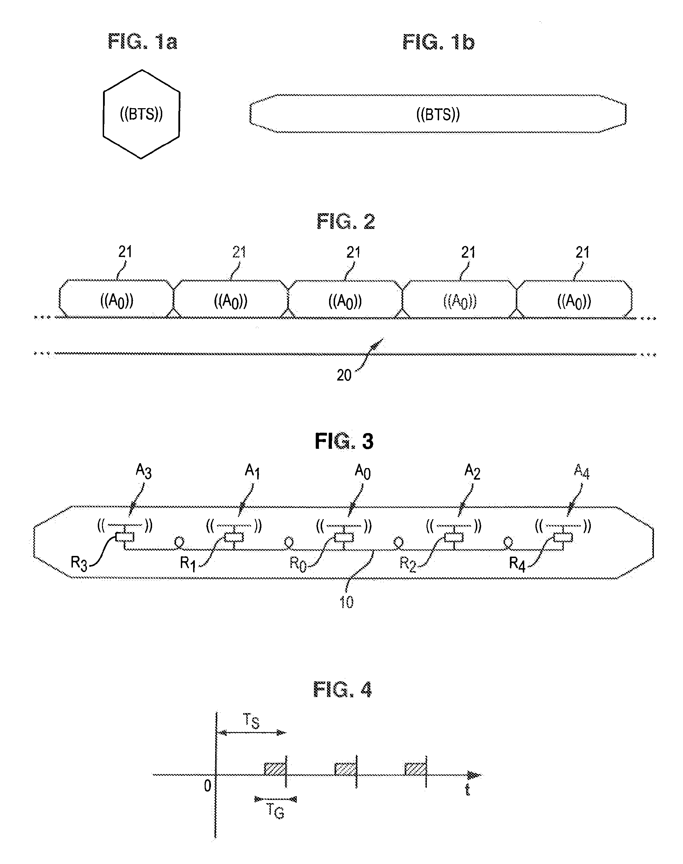

Une cellule est définie par une station de base (en anglais, « *Base Transceiver System* » (BTS)) comprenant une antenne principale qui diffuse le signal dans la cellule. Les figures 1a et 1b illustrent respectivement une cellule classique et une cellule longue.

Une solution connue pour diffuser le signal sur toute la longueur d'une cellule longue est d'utiliser des BTS à forte puissance d'émission en association avec une antenne à forte directivité et d'agencer une multiplicité de cellules longues de longueur raisonnable le long de voies de circulation. On a représenté sur la figure 2 une voie de circulation 20 couverte par plusieurs cellules longues 21.

Un inconvénient de cette solution est qu'elle est coûteuse en termes d'infrastructure. En effet, pour apporter la qualité de service aux endroits où elle est nécessaire il convient d'utiliser des cellules de petites tailles ce qui nécessitent d'avoir une forte densité de BTS (typiquement tous les 5 kms) c'est-à-dire une densification de puissance utile pour compenser les pertes de signal liées à la pénétration dans les trains ou les véhicules.

Un autre inconvénient de cette solution est que de nombreux transferts inter/intra cellulaire (en anglais, *handover*) sont constatés au cours du déplacement du terminal d'une cellule à l'autre

En effet, la couverture cellulaire des voies de circulation est soumise à une forte contrainte qui est celle de la mobilité des terminaux au sein de la zone géographique couverte car, contrairement à un réseau cellulaire conventionnel, notamment urbain, les terminaux mobiles se déplacent rapidement au sein de la cellule et d'une cellule à l'autre.

### RESUME DE L'INVENTION

L'invention vise à pallier les limitations des solutions connues, et plus particulièrement à accroitre la longueur des cellules longues sans que le coût d'investissement soit rédhibitoire, pour ainsi limiter la fréquence des handovers pour des terminaux se déplaçant le long de la voie de circulation couverte.

Ainsi, selon un premier aspect, l'invention concerne une cellule pour un réseau de communications cellulaire apte à couvrir une voie de circulation allongée notamment d'un réseau routier ou ferré, comprenant : une station de base connecté à une antenne principale et apte à émettre/recevoir un signal de radiocommunication ; un répéteur connecté à une antenne auxiliaire ; une fibre optique reliant le répéteur à la station de base et apte à transmettre le signal de radiocommunication de la station de base vers le répéteur et inversement avec un retard de transport lié au temps de propagation dans la fibre optique.

La cellule est **caractérisée en ce que** la station de base comprend un dispositif apte à retarder l'émission/réception, au niveau de l'antenne principale, du signal de radiocommunication d'un retard sensiblement égal audit retard de transport, pour synchroniser les signaux de radiocommunications émis/reçus par l'antenne principale et l'antenne auxiliaire.

La cellule de l'invention pourra en outre présenter facultativement au moins l'une des caractéristiques suivantes :
- elle comprend un ensemble de répéteurs reliés en ligne à la station de base par la fibre optique, chaque répéteur étant connecté à une antenne auxiliaire et comprenant également un dispositif apte à retarder l'émission par son antenne auxiliaire d'un retard croissant d'un répéteur de bout de ligne vers la station de base pour synchroniser les signaux de radiocommunications émis/reçus par l'antenne principale et les antennes auxiliaires ;
- le retard au niveau du répéteur de bout de ligne est nul ;
- le retard au niveau de l'antenne principale est sensiblement égal au retard de transport entre le répéteur de bout de ligne et la station de base ;
- elle comprend deux ensembles de répéteurs s'étendant dans deux sens opposés à partir de la station de base le long de la voie de communication ;
- le retard prédéterminé est ajustable ;
- chaque antenne possède un motif d'émission/réception bidirectionnel le long de la voie de communication ;
- chaque antenne est apte à émettre le signal de radiocommunication sur un même canal de communications cellulaire ;
- le retard au niveau de la station de base est mis en oeuvre dans un répéteur prévu entre ladite station de base et l'antenne principale.

Selon un second aspect l'invention concerne un réseau de communications cellulaire comprenant une pluralité de cellules selon le premier aspect de l'invention, lesdites cellules couvrant des zones géographiques successives le long de la voie de circulation.

L'invention permet la diffusion de signaux numériques au sein des cellules et peut être utilisée pour des communications mobiles (GSM UMTS, etc.) ou pour la diffusion de contenu multimédia (DVB_T, DVB_H).

Et selon un troisième aspect, l'invention concerne un répéteur comprenant des moyen pour retarder de façon ajustable, dans une gamme correspondant à une gamme de retards de transport dans une fibre optique reliant des répéteurs entre eux ou avec une station de base, un signal de radiocommunication émise/reçu par une antenne associée à ce répéteur.

Les avantages apportés par la présente invention sont nombreux :
- sur le plan financier, elle permet de substituer à des BTS des répéteurs, beaucoup moins coûteux (à ce jour environ 20 k€ pour un site répéteur contre 100k€ pour un site BTS) ; en outre, l'unique BTS de la cellule peut être réalisée sous forme d'une « micro BTS » de faible puissance ; l'impact environnemental est également important, puisque la consommation électrique typique d'un répéteur est de l'ordre de 150 W contre environ 800 W pour une BTS ;
- elle simplifie significativement les infrastructures correspondantes (notamment abris, lignes spécialisées, faisceau hertzien, baies d'énergie) ;
- la réduction du nombre de BTS permet à son tour d'améliorer fortement la qualité réseau en diminuant les *handovers* inter-cellules, leur nombre pouvant typiquement être divisé par 6 à 8 ;
- cette réduction du nombre de BTS permet également d'optimiser l'ingéniérie radio par diminution du nombre de canaux BCCH nécessaires, avec un facteur de division par 6 à 8.

Concrètement, on peut réaliser selon la présente invention, avec un nombre total de sept antennes bi-directionnelles espacées d'envion 5 km, une cellule d'une longueur pouvant atteindre 40 km.

### BREVE DESCRIPTION DES FIGURES

D'autres caractéristiques et avantages de l'invention ressortiront encore de la description qui suit, laquelle est purement illustrative et non limitative, et doit être lue en regard des figures annexées sur lesquelles, outre les figures 1 a et 1 b et 2 déjà discutées :
- la figure 3 illustre de manière schématique une cellule du réseau de communications cellulaire selon un mode de réalisation de l'invention ;
- la figure 4 illustre des *time slots* séparés par des intervalles de garde de durée T_{g} ;
- la figure 5 est une représentation schématique détaillée des moyens mis en oeuvre dans une cellule du réseau de communications cellulaire selon un mode de réalisation de l'invention ;
- la figure 6 illustre un système permettant de générer le temps de retard programmable dans des répéteurs mis en oeuvre dans la cellule du réseau de communications cellulaire selon un mode de réalisation de l'invention.

### DESCRIPTION DETAILLEE

On a représenté sur la figure 3 une cellule longue de longueur D comprenant une station de base BTS. La BTS comprend une antenne principale A₀ directionnelle apte à émettre/recevoir des signaux de radiocommunications le long d'une voie de circulation (voie ferrée, autoroute principalement).

La cellule comprend en outre quatre répéteurs R₁, R₂, R₃, R₄ situés le long de la voie de circulation et chacun connecté à une antenne auxiliaire (antennes A₁, A₂, A₃, A₄ respectivement, également directionnelles pour émettre/recevoir le long de la voie).

Les répéteurs sont connectés à la BTS par une fibre optique 10 apte à transmettre les signaux de radiocommunication de la BTS vers les répéteurs pour que les antennes auxiliaires A₁, A₂, A₃, A₄ émettent des signaux de radiocommunication correspondants, identique aux signaux émis par la BTS.

Les antennes auxiliaires A₁, A₂, A₃, A₄ sont en particulier reliées en succession à la BTS via les répéteurs R₁, R₂, R₃, R₄ connectés entre eux par la fibre optique 10.

Par l'utilisation de répéteurs, le signal issu de la BTS est diffusé sur toute la longueur de la cellule, et l'utilisation des répéteurs R₁, R₂, R₃, R₄ assure une densification en puissance tout le long de la cellule longue.

La diffusion du signal issu de la BTS est en effet relayée sur de longues distances en réduisant fortement la chute de puissance le long de la cellule.

La couverture cellulaire sur cellule longue par utilisation de répéteurs, reliés à la BTS par fibre optique, doit tenir compte des contraintes quant à la transmission des signaux.

En effet, la transmission radio d'un signal de communication s'effectue par trames, chaque trame étant découpée en intervalles de temps (en anglais, « *time slots* »). Les *time slots* sont séparés par un intervalle de garde afin d'éviter que les signaux issus de chaque antenne ne se chevauchent. On a représenté sur la figure 4 des *time slots* séparés par des intervalles de garde de durée T_{g}.

Cet intervalle de garde tient notamment compte, dans le cas du GSM, de l'avance temporelle (en anglais, « *timing advance* ») de la réception du sgnal par les antennes (voie montante de communication).

Dans le cadre d'une transmission par *time slots*, un mobile dans la zone de couverture ne devra pas pouvoir recevoir des trajets multiples avec des ecarts de retard supérieurs à la durée T_{g} du temps de garde.

Une solution pour tenir compte du *timing advance* est d'utiliser des antennes auxiliaires unidirectionnelles émettant le long de la voie de circulation dans la direction opposée à l'endroit où se trouvent la BTS et son antenne A₀. L'utilisation de telles antennes permet de limiter le recouvrement des émissions. Toutefois, cette solution est peu efficace pour répondre aux contraintes de topologie du terrain le long de voies de circulation. La zone de couverture de chaque antenne sera dans ce cas réduite. De plus, des zones de brouillage peuvent rester présentes au pied de chaque antenne, en fonction du niveau des émissions résiduelles sur le lobe arrière des antennes.

Une autre solution est d'utiliser des antennes bidirectionnelles de manière à améliorer la densification de la couverture par augmentation du nombre de points d'émission. La problématique des trajets multiples est, dans le cadre de cette solution, résolue par l'utilisation de fréquences différentes (canaux BCCH différents) sur chaque répéteur et sur la BTS. Cette solution ne permet pas d'obtenir une cellule longue mono BCCH et présente en outre l'inconvénient qu'il y a des *handovers* intracellulaire.

On va maintenant décrire l'approche utilisée selon la présente invention pour éviter les inconvénients des solutions présentées ci-dessus.

Tout d'abord, pour éviter les *handovers* intracellulaires, toutes les antennes de la cellule émettent le signal de radiocommunications sur une seule et même fréquence, à savoir un même canal BCCH.

Ensuite, pour gérer la synchronisation des émissions par chaque antenne (principale et auxiliaires), la station de base BTS et les répéteurs comportent des moyens pour retarder, selon la position de l'antenne dans la cellule, les émissions du signal par chaque antenne.

En effet, le signal diffusé par la BTS vers les antennes auxiliaires subit des retards qui sont liés à la transmission par fibre optique.

Ainsi, sans ajustement de l'émission, les signaux émis au niveau des répéteurs sont d'autant plus retardés que ces répéteurs sont éloignés de la station de base BTS.

Afin de compenser ces retards, les signaux émis par l'antenne principale et par les antennes auxiliaires intermédiaires sont retardés de façon à être émis en synchronisme avec les signaux émis par les antennes auxiliaires les plus éloignées. En d'autres termes, plus l'antenne auxiliaire est proche de la BTS, plus l'émission est retardée par le répéteur, tandis qu'un retard maximal, proportionnel à la distance entre la BTS et les répéteurs les plus éloignés, est dédié à l'antenne principale. En revanche, on comprend que le signal émis par l'antenne auxiliaire la plus éloignée de la station de base n'a pas à être retardé.

L'ajustement du retard au niveau de chaque antenne est principalement lié à la distance entre les antennes et à la vitesse de propagation dans la fibre optique reliant la BTS aux différents répéteurs.

De manière plus précise ce retard est de préférence égal à Δ*ᵢ* = *D*_{*i*,*j*} · δ_{fibre}, où D_{*i*,*j*} est la distance entre l'antenne i considéré et l'antenne j la plus éloignée de la BTS (ou l'antenne principale A₀), et δ_{fibre} est le retard dans la fibre optique par unité de longueur, qui est typiquement égal à 5µ*s*.*km*⁻¹*.*

Ce retard est configuré sur chaque répéteur pour compenser aussi précisément que possible le retard du signal dans la fibre optique et obtenir la synchronisation des émissions sur chaque antenne A₀, A₁, A₂, A₃, A₄.

Les antennes A₀, A₁, A₂, A₃, A₄ sont de préférences bidirectionnelles et émettent toutes sur une même fréquence (canal BCCH). L'utilisation d'un seul canal pour les émissions permet ainsi d'éviter les *handovers* intracellulaires.

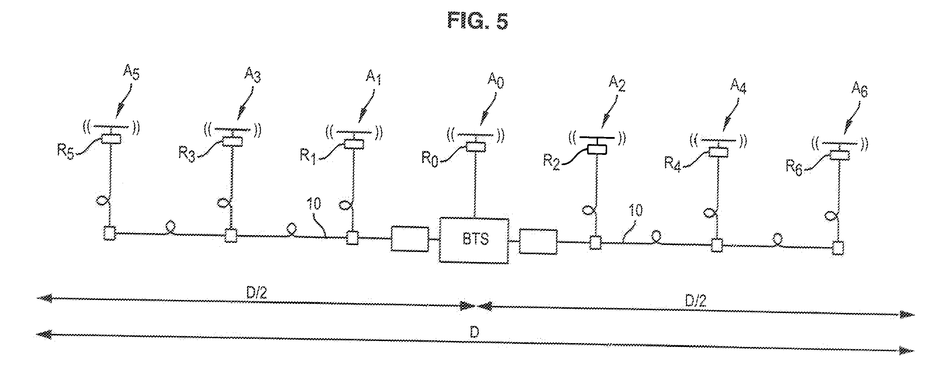

Comme on l'observe sur la figure 5, le retard au niveau de la station de base BTS peut être implémenté dans un autre répéteur R₀ prévu entre cette station et l'antenne principale.

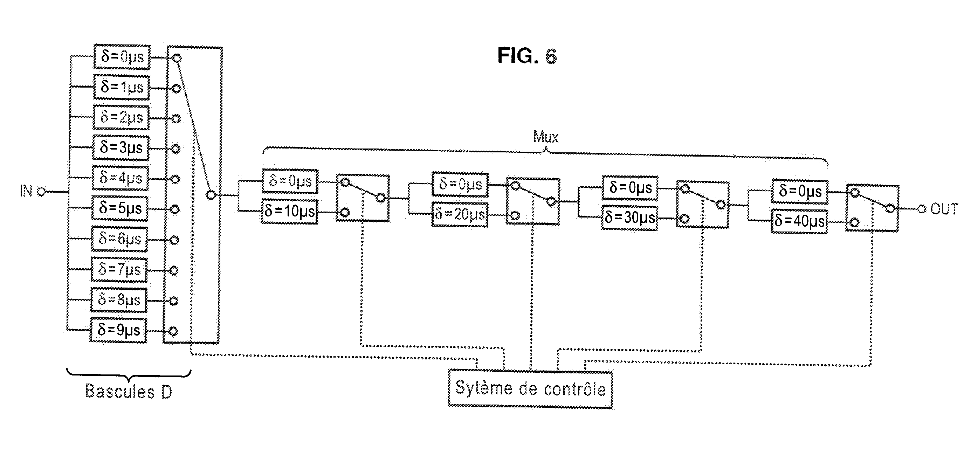

On a représenté sur la figure 6 un dispositif permettant d'ajuster le retard des répéteurs.

L'ajustement est réalisé par numérisation du signal à émettre en fréquence intermédiaire, sur la chaine d'amplification d'émission/réception du répéteur. Le signal IN numérisé en fréquence intermédiaire est ensuite dirigé vers une chaine de modules réalisant des retards fixes, effectué à base de bascules D.

Ces modules à retard sucessifs sont séparés par un ensemble MUX de multiplexeur piloté par un système de commande du répéteur, afin d'obtenir un temps de transit global réglable de 1 à 100µs avec une résolution de 1µs. Le signal OUT retardé est alors émis par les antennes.

Bien entendu, la présente invention n'est nullement limitée à la forme de réalisation décrite ci-dessus et représentée sur les dessins, mais l'homme du métier saura y apporter de nombreuses variantes et modifications.

## Revendications

1. Cellule pour un réseau de communications cellulaire apte à couvrir une voie de circulation allongée notamment d'un réseau routier ou ferré, comprenant
- une station de base (BTS) connecté à une antenne principale (A0) et apte à émettre/recevoir un signal de radiocommunication ;
- un répéteur (Ri) connecté à une antenne auxiliaire (Ai) ;
- une fibre optique (10) reliant le répéteur (Ri) à la station de base (BTS) et apte à transmettre le signal de radiocommunication de la station de base (BTS) vers le répéteur (Ri) et inversement avec un retard de transport lié au temps de propagation dans la fibre optique ;
la cellule est **caractérisée en ce que** la station de base (BTS) comprend un dispositif apte à retarder l'émission/réception, au niveau de l'antenne principale (A0), du signal de radiocommunication d'un retard sensiblement égal audit retard de transport, pour synchroniser les signaux de radiocommunications émis/reçus par l'antenne principale (A0) et l'antenne auxiliaire (Ai) et **en ce qu'**elle comprend un ensemble de répéteurs reliés en ligne à la station de base par la fibre optique, chaque répéteur étant connecté à une antenne auxiliaire et comprenant également un dispositif apte à retarder l'émission par son antenne auxiliaire d'un retard croissant d'un répéteur de bout de ligne vers la station de base pour synchroniser les signaux de radiocommunications émis/reçus par l'antenne principale (A0) et les antennes auxiliaires (Ai).

2. Cellule selon la revendication 1, dans lequel le retard au niveau du répéteur de bout de ligne est nul.

3. Cellule selon la revendication 2, dans lequel le retard au niveau de l'antenne principale est sensiblement égal au retard de transport entre le répéteur de bout de ligne et la station de base.

4. Cellule selon l'une des revendications 1 à, comprenant deux ensembles de répéteurs s'étendant dans deux sens opposés à partir de la station de base le long de la voie de communication,

5. Cellule selon l'une des revendications 1 à 4, dans lequel le retard prédéterminé est ajustable.

6. Cellule selon l'une des revendications 1 à 5, dans lequel chaque antenne possède un motif d'émission/réception bidirectionnel le long de la voie de communication.

7. Cellule selon l'une des revendications 1 à 6, dans lequel chaque antenne est apte à émettre le signal de radiocommunication sur un même canal de communications cellulaire.

8. Cellule selon l'une des revendications 1 à 7, dans lequel le retard au niveau de la station de base est mis en oeuvre dans un répéteur prévu entre ladite station de base et l'antenne principale.

9. Réseau de communications cellulaire comprenant une pluralité de cellules selon l'une des revendications précédentes, lesdites cellules couvrant des zones géographiques successives le long de la voie de circulation.

10. Répéteur pour un réseau de communications cellulaires selon la revendication 9, comprenant des moyens pour retarder de façon ajustable, dans une gamme correspondant à une gamme de retards de transport dans une fibre optique reliant des répéteurs entre eux ou avec une station de base, un signal de radiocommunication émis/reçu par une antenne associée à ce répéteur.
